# EUROPÄISCHE PATENTSCHRIFT

(11) **EP 3 591 187 B1**
(45) Veröffentlichungstag und Bekanntmachung des Hinweises auf die Patenterteilung: **01.04.2026**
(21) Anmeldenummer: 19183567.7
(22) Anmeldetag: 01.07.2019
(51) Int. Cl.: F02B 37/22, F02B 37/24, F02D 41/00, F02M 26/06, F04D 25/04, F04D 27/02, F04D 29/42, F02D 41/02, F02D 41/12, F04D 25/02, F02B 37/12

(54) **VERFAHREN ZUM BETREIBEN EINER BRENNKRAFTMASCHINE MIT EINEM DEM VERDICHTER ZUGEORDNETEN TRIMMSTELLER**
METHOD FOR OPERATING AN INTERNAL COMBUSTION ENGINE WITH A TRIM CONTROLLER ASSIGNED TO THE COMPRESSOR
PROCÉDÉ DE FONCTIONNEMENT D'UN MOTEUR À COMBUSTION INTERNE AVEC UN CONTRÔLEUR DE COMPENSATION AFFECTÉ AU COMPRESSEUR

(30) Priorität: 05.07.2018 DE 102018211094
(43) Veröffentlichungstag der Anmeldung: 08.01.2020
(73) Patentinhaber: Volkswagen AG, 38440 Wolfsburg (DE)
(72) Erfinder: Hagelstein, Dirk, 38110 Braunschweig (DE); Bartolome, Javier, 38102 Braunschweig (DE)

(56) Entgegenhaltungen:
- EP-A1- 3 176 440
- EP-A1- 3 543 538
- WO-A1-2013/074503
- DE-A1- 102015 203 551
- DE-A1- 102015 209 704
- DE-A1- 102017 005 412
- DE-B3- 102012 011 423
- US-A1- 2017 298 943

## Beschreibung

Die Erfindung betrifft ein Verfahren zum Betreiben einer Brennkraftmaschine und eine zur Durchführung eines solchen Verfahrens geeignete Brennkraftmaschine. Die Erfindung betrifft auch ein Kraftfahrzeug mit einer solchen Brennkraftmaschine.

In einem Verdichter einer Brennkraftmaschine wird das über einen Frischgasstrang einem Verbrennungsmotor der Brennkraftmaschine zuzuführende Frischgas verdichtet. Dabei ist die Anhebung des Drucks des Frischgases von der Drehzahl des Verdichterlaufrads sowie von dem Massenstrom des über das Verdichterlaufrad geführten Frischgases abhängig. In Richtung der sogenannten Pumpgrenze des Verdichterkennfelds erfolgt die Anströmung der Eintrittskanten der Laufradschaufeln infolge der gegenüber der Umfangsgeschwindigkeit abnehmenden Anströmgeschwindigkeit zunehmend druckseitig, d.h. die Inzidenz der Anströmung nimmt stetig zu. Ab einem betriebspunktabhängigen Grenzwert der Inzidenz, der sogenannten Pumpgrenze, löst die Strömung an den Eintrittskanten ab und die Strömung im Verdichter wird instabil. Im Bereich der Pumpgrenze bildet sich an der einlassseitigen Gehäusekontur des Verdichters ein Rückströmgebiet impulsarmen Fluids aus. Diese sogenannte Rückströmblase führt durch Drall- und Mischungsverluste zu einem Abfall des Verdichterwirkungsgrads. Im Bereich der Nabenkontur des Laufrads verläuft aber auch nahe der Pumpgrenze eine impulsreiche und verlustarme Kernströmung durch den Verdichter, die den Massendurchsatz und den Druckaufbau bestimmt.

Ein Trimmsteller, wie er beispielsweise aus der DE 10 2010 026 176 A1, der EP 3 018 355 A1, der DE 10 2015 209 704 A1, der DE 10 2014 225 716 A1 oder der WO 2014/131790 A1 bekannt ist, dient der Verschiebung der Pumpgrenze eines Verdichterkennfelds in Richtung relativ niedriger Massenströme bei relativ hohen Druckverhältnissen. Gleichzeitig kann ein Trimmsteller im Bereich der Pumpgrenze einen Anstieg des Verdichterwirkungsgrads bewirken. Hierzu umfasst ein Trimmsteller eine Vorrichtung, durch die der Anströmquerschnitt, in dem das Laufrad des Verdichters angeströmt wird, veränderbar ist. Durch die so erreichte Düsenwirkung des Trimmstellers kann mit zunehmendem Regeleingriff (Verkleinerung des Anströmquerschnitts) die Gasströmung stärker auf den nabennahen Eintrittsquerschnitt des Verdichterlaufrads fokussiert werden. Dadurch strömt weniger Gas in den impulsarmen und verlustbehafteten Bereich der Rückströmblase und die Kernströmung im nabennahen Bereich wird beschleunigt und dadurch zusätzlich stabilisiert. Die Beschleunigung der Gasströmung im nabennahen Bereich des Verdichterlaufrads hat zusätzlich eine saugseitige Verschiebung der Anströmung des Verdichterlaufrads zur Folge, was zu einer weiteren Stabilisierung der Gasströmung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimmsteller vollständig geöffnet) wird möglichst der gesamte vorliegenden Anströmung des Verdichterlaufrads möglichst keine zusätzlichen Reibungs- oder Drosselverluste entstehen. Der Verdichterwirkungsgrad und die Breite des Verdichterkennfelds werden deshalb in Richtung der Stopfgrenze nicht in einem relevanten Maße negativ durch einen Trimmsteller beeinflusst.

Die Möglichkeit einer Rückströmung von bereits verdichtetem Frischgas infolge der nur unvollständigen Separierung der Hochdruck- und der Niederdruckseiten voneinander durch das Verdichterlaufrad, die sich aus der im Fahrzeugbau üblichen Ausgestaltung von Verdichtern in Form von Turboverdichtern ergibt, kann sich auch dann als problematisch zeigen, wenn eine in die Ladeluftstrecke integrierte Drosselklappe, die zuvor weit geöffnet war, schnell geschlossen wird. Dies ist bei einem Übergang von einem Zug- in den Schubbetrieb der Brennkraftmaschine der Fall. Die Trägheit des Systems "Brennkraftmaschine" kann dann dazu führen, dass der Verdichter zunächst noch weiter mit gegebenenfalls hoher Verdichtungsleistung in die bereits durch die geschlossene Drosselklappe unterbrochene Ladeluftstrecke fördert, was zu einem entsprechend hohen Verdichterdruckverhältnis bei gleichzeitig sehr geringem Massenstrom an Frischgas durch den Verdichter führt. Diese Verhältnisse begünstigen ein Rückströmen von verdichtetem Frischgas über das dann nicht oder nur noch mit geringer Drehzahl angetriebene Verdichterlaufrad.

Derart rückströmendes Frischgas kann sich wellenförmig ausbreiten, was zu einer entsprechenden Schwingungsanregung von Komponenten des Frischgasstrangs stromauf des Verdichterlaufrads führen kann. Die mit dieser Schwingungsanregung verbundene Geräuschentwicklung wird vielfach auch als "Entlastungsfauchen" bezeichnet.

Ein solches Entlastungsfauchen kann durch die Integration einer Schubumluftvorrichtung in einen Verdichter vermieden werden. Hierbei handelt es sich um eine mittels eines (Schubumluft-)Ventils bedarfsweise freigebbare oder verschließbare Bypassleitung, die einen Abschnitt des Strömungspfads im Verdichter stromab des Verdichterlaufrads mit einem Abschnitt stromauf des Verdichterlaufrads verbindet. Ein relativ hohes Verdichterdruckverhältnis über dem Verdichterlaufrad, das zu einem Entlastungsfauchen führen könnte, kann mittels einer solchen Schubumluftvorrichtung durch ein entsprechendes Öffnen des Schubumluftventils reduziert werden. Die Kosten für eine solche Schubumluftvorrichtung sind jedoch relativ hoch.

Weiterhin kann eine Integration schalldämmender Elemente in denjenigen Abschnitt des Frischgasstrangs, der bezüglich des Verdichtereinlasses stromauf gelegen ist, vorgesehen sein, um die Auswirkungen der Schwingungsanregung und damit ein Entlastungsfauchen gering zu halten. Dies ist aber ebenfalls mit relativ hohen Kosten verbunden. Zudem erfordert eine solche Maßnahme üblicherweise einen relativ großen Bauraum.

Die WO 2004/022956 A1 offenbart ein Verfahren, durch das ein Betrieb eines Verdichters einer Brennkraftmaschine im Bereich der Pumpgrenze vermieden werden soll. Hierbei ist vorgesehen, das Verhalten des Verdichters mittels eines Luftströmungssensors, der in einem Ansaugtrakt der Brennkraftmaschine angeordnet ist, hinsichtlich eines charakteristischen Schwingungsverhaltens des den Ansaugtrakt durchströmenden Frischgases zu überwachen. Wird auf diese Weise ein kurzfristig drohendes Erreichen der Pumpgrenze ermittelt, wird beispielsweise der Wert für den zu erzielenden Soll-Ladedruck reduziert, wozu eine den Verdichter antreibende Abgasturbine mittels einer Verstellung einer Vorrichtung zur variablen Turbinenanströmung (VTG) in entsprechend veränderter Weise angeströmt wird.

Die EP 3 176 440 A1), die nachveröffentlichte EP 3 543 538 A1 und die WO 2013/074503 A1 beschreiben jeweils einen Verdichter mit einem Trimmsteller und offenbaren zudem, dass mittels eines solchen Trimmstellers die Pumpgrenze im Verdichterkennfeld in Richtung kleinerer Massenströme verschiebbar ist. Beschrieben ist auch, dass Pumpen auftreten kann, wenn der Verbrennungsmotor plötzlich verzögert betrieben wird.

Der Erfindung lag die Aufgabe zugrunde, eine mittels eines Verdichters aufgeladene Brennkraftmaschine zu entwickeln, die sich durch ein möglichst optimales Betriebsverhalten, insbesondere auch hinsichtlich des akustischen Verhaltens, auszeichnet.

Diese Aufgabe wird durch ein Verfahren zum Betreiben einer Brennkraftmaschine gemäß dem Patentanspruch 1 gelöst. Eine zur automatisierten Durchführung eines solchen Verfahrens geeignete Brennkraftmaschine und ein Kraftfahrzeug mit einer solchen Brennkraftmaschine sind Gegenstände der Patentansprüche 4 und 9. Vorteilhafte Ausführungsformen des erfindungsgemäßen Verfahrens und bevorzugte Ausgestaltungsformen der erfindungsgemäßen Brennkraftmaschine und damit des erfindungsgemäßen Kraftfahrzeugs sind Gegenstände der weiteren Patentansprüche und/oder ergeben sich aus der nachfolgenden Beschreibung der Erfindung.

Der Erfindung liegt der Gedanke zugrunde, bei einer mittels eines Verdichters aufgeladenen Brennkraftmaschine, bei der dem Verdichter ein Trimmsteller zugeordnet ist, um dessen Betriebsverhalten verbessern, den Trimmsteller auch aktiv zu nutzen, um ein Entlastungsfauchen, das bei aufgeladenen Brennkraftmaschinen beim Übergang von einem Zugbetrieb in einen Schubbetrieb auftreten kann, zu vermeiden oder zumindest gering zu halten.

Dementsprechend ist ein Verfahren zum Betreiben einer Brennkraftmaschine vorgesehen, wobei die Brennkraftmaschine zumindest einen Verbrennungsmotor und einen Frischgasstrang umfasst, wobei in den Frischgasstrang ein Verdichter integriert ist, dem ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers geringstmöglich (d.h. so wenig, wie es durch die konstruktive Ausgestaltung maximal möglich ist) und in einer Abdeckstellung des Trimmstellers weitestmöglich (d.h. so weitgehend, wie es durch die konstruktive Ausgestaltung maximal möglich ist) abgedeckt. In eine Ladeluftstrecke, d.h. den Abschnitt des Frischgasstrangs, der den Verdichter mit dem Verbrennungsmotor verbindet, ist zudem eine Drosselklappe integriert. Während eines Zugbetriebs des Verbrennungsmotors befindet sich der Trimmsteller in der Freigabestellung, während die Drosselklappe zumindest teilweise geöffnet ist, und für einen Schubbetrieb des Verbrennungsmotors wird die Drosselklappe vollständig geschlossen. Erfindungsgemäß ist vorgesehen, dass der Trimmsteller bei einem Übergang von dem Zugbetrieb zu dem Schubbetrieb des Verbrennungsmotors möglichst unmittelbar mit der Lastwegnahme, durch die der Übergang von dem Zugbetrieb in den Schubbetrieb gekennzeichnet ist, in die Abdeckstellung verstellt wird.

Ein Zugbetrieb des Verbrennungsmotors ist dabei dadurch gekennzeichnet, dass dieser unter Last betrieben und folglich von diesem eine Antriebsleistung erzeugt wird. Im Gegensatz dazu ist ein Schubbetrieb dadurch gekennzeichnet, dass keine Lastanforderung an den Verbrennungsmotor gestellt wird und dieser angetrieben wird; bei der bevorzugten Integration einer erfindungsgemäßen Brennkraftmaschine in einem Kraftfahrzeug erfolgt ein solcher Antrieb des Verbrennungsmotors insbesondere durch ein Rollen des Kraftfahrzeugs bei nicht unterbrochenem Antriebsstrang.

Die Verstellung des Trimmstellers erfolgt erfindungsgemäß möglichst unmittelbar mit der Lastwegnahme, durch die der Übergang von einem Zug- in den Schubbetrieb gekennzeichnet ist, oder mit dem Beginn einer damit verbundenen Schließbewegung der Drosselklappe. Möglich ist auch, die Verstellung des Trimmstellers mit einem Befehl zur Lastwegnahme, beispielsweise durch Entlastung eines Fahrpedals eines eine erfindungsgemäße Brennkraftmaschine umfassenden Kraftfahrzeugs, zu initiieren, was mit einer tatsächlich durch eine Steuerungsvorrichtung der Brennkraftmaschine durchgeführten Lastwegnahme und/oder mit einem Schließen einer Drosselklappe zeitlich geringfügig auseinanderfallen kann. Möglich ist aber auch eine geringfügig zeitlich verzögerte Verstellung des Trimmstellers, beispielsweise bis maximal 0,3 Sekunden nach dem Übergang von einem Zug- in den Schubbetrieb.

Erfindungsgemäß wird der Trimmsteller einer erfindungsgemäßen Brennkraftmaschine aktiv in die Abdeckstellung verstellt, wenn infolge eines Übergangs von dem Zugbetrieb in den Schubbetrieb eine randseitige Rückströmung von bereits verdichtetem Frischgas von der Hochdruckseite zu der Niederdruckseite des Verdichters erfolgen kann. Der dann den randseitigen Abschnitt des Eintrittsquerschnitts des Verdichterlaufrads weitestgehend abdeckende Trimmsteller verhindert oder stört eine solche Rückströmung beziehungsweise deren weitere Ausbreitung in den stromauf des Trimmstellers gelegenen Abschnitt des Frischgasstrangs, wodurch Schwingungsanregungen, die zu einem Entlastungsfauchen führen würden, verhindert oder gering gehalten werden können.

Eine zur automatisierten Durchführung eines erfindungsgemäßen Verfahrens geeignete Brennkraftmaschine umfasst zumindest einen Verbrennungsmotor (insbesondere einen Ottomotor oder einen sonstigen, zumindest zeitweise fremdgezündeten und quantitätsgeregelten Verbrennungsmotor) und einen Frischgasstrang, wobei in den Frischgasstrang ein Verdichter und, zwischen dem Verbrennungsmotor und dem Verdichter eine Drosselklappe integriert sind und wobei dem Verdichter ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers geringstmöglich und in einer Abdeckstellung des Trimmstellers weitestmöglich abgedeckt. Weiterhin umfasst eine solche Brennkraftmaschine eine Steuerungsvorrichtung zur automatisierten Durchführung eines erfindungsgemäßen Verfahrens.

Als "Eintrittsebene" des Verdichterlaufrads wird erfindungsgemäß die bezüglich des Trimmstellers am nächsten gelegene, senkrecht zu der Rotationsachse des Verdichterlaufrads ausgerichtete Ebene verstanden, die von Laufradschaufeln des Verdichterlaufrads definiert wird, indem zumindest ein punktförmiger Abschnitt eines, mehrerer oder aller Eintrittskanten dieser Laufradschaufeln innerhalb dieser Ebene angeordnet ist. Der "Eintrittsquerschnitt" des Verdichterlaufrads ist dann der in dieser Eintrittsebene gelegene Öffnungsquerschnitt des Strömungsraums.

Der Trimmsteller einer erfindungsgemäßen Brennkraftmaschine kann grundsätzlich beliebig, beispielsweise gemäß einer der Ausführungsformen, wie sie in der DE 10 2010 026 176 A1, der EP 3 018 355 A1, der DE 10 2015 209 704 A1, der DE 10 2014 225 716 A1 oder der WO 2014/131790 A1 offenbart sind, ausgestaltet sein.

Gemäß einer bevorzugten Ausgestaltungsform umfasst der Trimmsteller einer erfindungsgemäßen Brennkraftmaschine eine ringförmige Blende. Die Blende kann dabei beispielsweise in Form einer Irisblende, wie sie grundsätzlich auch von Fotoobjektiven bekannt ist, ausgeführt sein. Alternativ kann die Blende auch einen insbesondere ringförmigen Stator und einen insbesondere ringförmigen Rotor umfassen, die in längsaxialer Richtung nebeneinander angeordnet sind, wobei sowohl der Stator als auch der Rotor jeweils mindestens eine Durchgangsöffnung ausbilden, die durch eine Rotation des Rotors relativ zu dem Stator in verschiedene Relativpositionen bewegt werden können, in denen diese nicht, teilweise oder vollständig in Überdeckung liegen. Ein Trimmsteller, der lediglich eine solche Blende umfasst, kann sich durch eine relativ einfache konstruktive Ausgestaltung auszeichnen.

Gemäß einer bevorzugten Weiterbildung eines solchen Trimmstellers mit ringförmige Blende für eine erfindungsgemäße Brennkraftmaschine kann vorgesehen sein, dass dieser zusätzlich noch eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene des Verdichterlaufrads in einen das Verdichterlaufrad aufnehmenden Strömungsraum des Verdichters übergehen, wobei der periphere Strömungsbereich mittels der Blende verschließbar ausgebildet ist. Die Blende kann dabei vorzugsweise an dem stromaufwärts gelegenen Ende des peripheren Strömungsbereichs angeordnet sein. Mittels einer solchen Kombination aus Blende und Strömungsführungsvorrichtung kann, im Vergleich zu einem Trimmsteller, der lediglich eine ringförmige Blende umfasst, die Funktion des Trimmstellers sowohl hinsichtlich der Auswirkungen auf das Verdichterkennfeld als auch hinsichtlich der Unterdrückung eines Entlastungsfauchens verbessert werden.

Noch weiter verbessern lässt sich die Funktion eines solchen Trimmstellers mit Blende und Strömungsführungsvorrichtung, wenn zumindest ein zu dem Verdichterlaufrad benachbart gelegener Endabschnitt der Strömungsführungsvorrichtung, gegebenenfalls die gesamte Strömungsführungsvorrichtung, längsaxial (d.h. entlang der Rotationsachse des Verdichterlaufrads) verschiebbar ausgebildet ist, wobei der periphere Strömungsbereich in dem Bereich der Eintrittsebene des Verdichterlaufrads in einer Verschlussstellung der Strömungsführungsvorrichtung durch diesen Endabschnitt verschlossen und in einer Öffnungsstellung freigegeben ist.

Gemäß einer bevorzugten Ausführungsform eines erfindungsgemäßen Verfahrens kann vorgesehen sein, dass der Trimmsteller bei weiterhin andauerndem Schubbetrieb nach dem Erreichen eines definierten Grenzwerts wieder in die Freigabestellung verstellt wird. Dies kann insbesondere dazu dienen, einen Aktor, der zur Betätigung des Trimmstellers vorgesehen ist, zu entlasten beziehungsweise nicht unnötig lange zu belasten. Ein solches Vorgehen kann insbesondere bei einer Ausgestaltung des Trimmstellers einer erfindungsgemäßen Brennkraftmaschine vorgesehen sein, die derart gewählt ist, dass der Trimmsteller bei fehlender Ansteuerung mittels der Steuerungsvorrichtung selbsttätig mittels einer Rückstellvorrichtung, die insbesondere in Form eines Federelements ausgebildet sein kann, in eine/die Freigabestellung, in der der Trimmsteller den randseitigen Abschnitt des Eintrittsquerschnitts geringstmöglich abdeckt, beaufschlagt ist. Durch eine solche Ausgestaltung des Trimmstellers kann insbesondere eine so genannte failsafe-Funktionalität realisiert werden, da die Rückstellvorrichtung den Trimmsteller bei einem Ausfall der Steuerungsvorrichtung oder des den Trimmsteller betätigenden Aktors in die den Eintrittsquerschnitt geringstmöglich abdeckende Freigabestellung verstellt und dadurch einen Notlaufbetrieb des Verdichters mit den geringsten Funktionseinbußen sicherstellen kann.

Der Grenzwert, bei dessen Erreichen der Trimmsteller vorzugsweise wieder in die Freigabestellung verstellt wird, ist vorzugsweise so definiert sein, dass bei dessen Erreichen nicht mehr von der Gefahr der Entstehung eines Entlastungsfauchens ausgegangen werden muss. Der Grenzwert kann in vorteilhafter Weise einen Gasdruck (als Absolutdruck oder Relativdruck oder Differenzdruck) in dem Frischgasstrang definieren, so dass ein Verstellen des Trimmstellers (wieder) in die Freigabestellung dann durchgeführt wird, wenn eine ausreichende Angleichung des Gasdrucks auf der Hochdruckseite und der Niederdruckseite des Verdichters erreicht wurde.

Der Verdichter einer erfindungsgemäßen Brennkraftmaschine kann insbesondere Teil eines Abgasturboladers sein, der weiterhin eine in den Abgasstrang integrierte Abgasturbine umfasst, wobei die vorzugsweise vorgesehene Abgasrückführleitung dann insbesondere stromab der Abgasturbine aus dem Abgasstrang abgehen kann. Der Antrieb des Verdichters erfolgt dann mittels der Abgasturbine unter Nutzung der Abgasenthalpie. Alternativ oder ergänzend kann der Verdichter auch auf andere Weise, beispielsweise von dem Verbrennungsmotor, d.h. mechanisch, oder mittels eines Elektromotors, antreibbar ausgebildet sein.

Eine erfindungsgemäße Brennkraftmaschine kann insbesondere Teil eines (erfindungsgemäßen) Kraftfahrzeugs sein. Dabei kann der Verbrennungsmotor der Brennkraftmaschine insbesondere zur direkten oder indirekten Bereitstellung der Fahrantriebsleistung für das Kraftfahrzeug vorgesehen sein.

Bei einem solchen Kraftfahrzeug kann es sich insbesondere um ein radbasiertes und nicht schienengebundenen Kraftfahrzeug (vorzugsweise ein PKW oder ein LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungs- und Ausgestaltungsbeispielen näher erläutert. In den Zeichnungen zeigt, jeweils in vereinfachter Darstellung:
- Fig. 1:: eine erfindungsgemäße Brennkraftmaschine;
- Fig. 2:: einen Längsschnitt durch einen Verdichter für eine Brennkraftmaschine gemäß der Fig. 1 mit einem dazugehörigen Trimmsteller in einer einen Eintrittsquerschnitt eines Laufrads des Verdichter geringstmöglich abdeckenden Stellung;
- Fig. 3:: den Verdichter gemäß der Fig. 2 mit dem Trimmsteller in einer den Eintrittsquerschnitt des Verdichterlaufrads weitestmöglich abdeckenden Stellung; und
- Fig. 4:: in insgesamt vier Diagrammen die Verläufe von verschiedenen Kennwerten während eines Abschnitts im Betrieb einer erfindungsgemäßen Brennkraftmaschine, der einen Übergang von einem Zugbetrieb in den Schubbetrieb umfasst.

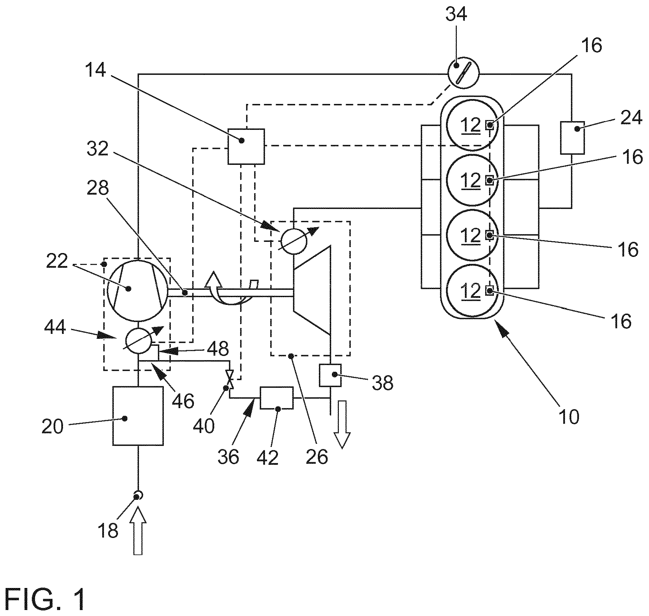

Die Fig. 1 zeigt in schematischer Darstellung eine erfindungsgemäße Brennkraftmaschine mit einem als Ottomotor ausgebildeten Verbrennungsmotor 10, der eine Mehrzahl von Zylindern 12 ausbildet. Die Zylinder 12 begrenzen gemeinsam mit darin auf und ab geführten Kolben und einem Zylinderkopf (nicht dargestellt) Brennräume, in denen Frischgas gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingespritzt. Das Verbrennen der Kraftstoff-Frischgas-Gemischmengen führt zu zyklischen Auf- und Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird.

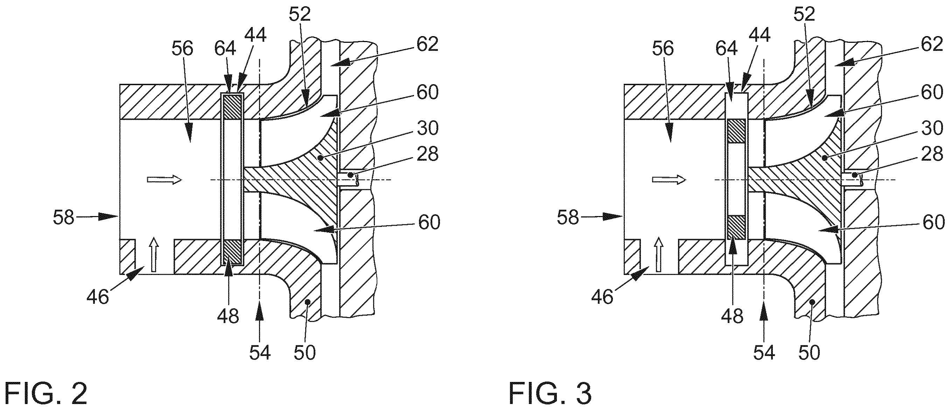

Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen Verdichter 22, der Teil eines Abgasturboladers ist, geführt. Das Frischgas wird mittels des Verdichters 22 verdichtet, anschließend in einem Ladeluftkühler 24 gekühlt und dann den Brennräumen zugeführt. Der Antrieb des Verdichters 22 erfolgt mittels einer Abgasturbine 26 des Abgasturboladers, die in einen Abgasstrang der Brennkraftmaschine integriert ist. Abgas, das bei der Verbrennung der Kraftstoff-Frischgas-Gemischmengen in den Brennräumen des Verbrennungsmotors 10 entsteht, wird über den Abgasstrang aus dem Verbrennungsmotor 10 abgeführt und durchströmt dabei die Abgasturbine 26. Dies führt in bekannter Weise zu einem rotierenden Antrieb eines Turbinenlaufrads (nicht dargestellt), das über eine Welle 28 drehfest mit einem Verdichterlaufrad 30 (vgl. Fig. 2 und 3) des Verdichters 22 verbunden ist. Der rotierende Antrieb des Turbinenlaufrads wird somit auf das Verdichterlaufrad 30 übertragen.

Um bei einem Betrieb des Verbrennungsmotors 10 mit variierenden Lasten und Drehzahlen eine möglichst optimale Nutzung der Enthalpie des Abgases zur Erzeugung von Verdichtungsleistung mittels des Abgasturboladers zu realisieren, kann die Abgasturbine 26 des Abgasturboladers optional eine mittels der Steuerungsvorrichtung 14 ansteuerbare Vorrichtung zur variablen Turbinenanströmung (VTG) 32 aufweisen. Diese kann in bekannter Weise eine Mehrzahl von in einem Einlasskanal der Abgasturbine 26 angeordneten Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlasskanal der Abgasturbine 26 mehr oder weniger und beeinflussen zudem den Abschnitt der primären Anströmung des Turbinenlaufrads und die Ausrichtung dieser Anströmung.

Stromab des Verdichters 22 ist in die Ladeluftstrecke, d.h. in den Abschnitt des Frischgasstrangs, der zwischen dem Verdichter 22 und dem Verbrennungsmotor 10 gelegen ist, eine ebenfalls mittels der Steuerungsvorrichtung 14 ansteuerbare Drosselklappe 34 integriert.

Die Brennkraftmaschine kann eine Abgasrückführleitung 36 zur Realisierung einer (Niederdruck-)Abgasrückführung umfassen, bei der Abgas aus einem Abschnitt des Abgasstrangs, der stromab der Abgasturbine 26 und insbesondere auch stromab einer Abgasnachbehandlungsvorrichtung 38, beispielsweise eines Partikelfilters, gelegen ist, abgezweigt und in einen Abschnitt des Frischgasstrangs stromauf des Verdichterlaufrads 30 eingeleitet werden kann. Die Menge des über die Abgasrückführleitung 36 rückzuführenden Abgases kann dabei mittels eines Regelventils 40, das mittels der Steuerungsvorrichtung 14 ansteuerbar ist, gesteuert oder geregelt werden. Weiterhin kann in die Abgasrückführleitung 36 ein Abgaskühler 42 zur Kühlung des darüber geführten Abgases integriert sein.

Dem Verdichter 22 ist ein Trimmsteller 44 zugeordnet, mittels dessen die Anströmung des Verdichterlaufrads 30 durch das Frischgas beeinflusst werden kann. Dazu ist der Trimmsteller 44 beziehungsweise ein dazugehöriger Aktor (nicht dargestellt) mittels der Steuerungsvorrichtung 14 ansteuerbar. Die Abgasrückführleitung 36 kann stromauf beziehungsweise auf der von dem Verdichterlaufrad 30 abgewandten Seite des Trimmstellers 44 in den Frischgasstrang münden. Ein Mündung stromab oder im Bereich des Trimmstellers 44 (und stromauf des Verdichterlaufrads 30) ist ebenfalls möglich.

Die Fig. 2 und 3 zeigen jeweils in einem Längsschnitt eine mögliche Ausgestaltungsform für einen erfindungsgemäßen Verdichter 22. Dieser Verdichter 22 kann beispielsweise für eine Brennkraftmaschine gemäß der Fig. 1 vorgesehen sein, wobei dann der Trimmsteller 44 und ein Anschlusskanal 46 für die Abgasrückführleitung 36 integrale Bestandteile des Verdichters 22 sind. Dies ist in der Fig. 1 durch einen gestrichelten Rahmen angedeutet.

Der Verdichter 22 gemäß den Fig. 2 und 3 umfasst ein Gehäuse 50, das ein Teilgehäuse eines Gesamtgehäuses eines Abgasturboladers darstellen kann. Das Gehäuse 50 des Verdichters 22 bildet einen Strömungsraum 52 aus, innerhalb dessen das Verdichterlaufrad 30 drehbar gelagert ist. Einlassseitig weist der Strömungsraum 52 einen in einer Eintrittsebene 54 liegenden Eintrittsquerschnitt auf. Über einen ebenfalls von dem Gehäuse 50 des Verdichters 22 ausgebildeten Einlasskanal 56 kann Frischgas von einem Verdichtereinlass 58 zu dem Verdichterlaufrad 30 geführt werden. Auslassseitig wird der Strömungsraum 52 von einer um Austrittskanten von Laufradschaufeln 60 des Verdichterlaufrads 30 umlaufenden "Austrittsebene" begrenzt. Dort schließt sich ein ebenfalls um die Austrittskanten der Laufradschaufeln 60 umlaufender Diffusorraum 62 und daran anschließend, was in den Fig. 2 und 3 nicht mehr dargestellt ist, eine Verdichtervolute an. Aus der Verdichtervolute geht ein Verdichterauslass (ebenfalls nicht dargestellt) ab.

Innerhalb des Einlasskanals 56 ist der Trimmsteller 44 in einer möglichst kurzen Entfernung zu dem Eintrittsquerschnitt des Verdichterlaufrads 30 angeordnet. Der Trimmsteller 44 umfasst eine Irisblende 48 mit einem grundsätzlich auch von Fotoobjektiven bekannten Aufbau. In einer Abdeckstellung gemäß der Fig. 3 verhindert der Trimmsteller 44 weitestmöglich eine Anströmung des Verdichterlaufrads 30 durch Frischgas, das in Richtung des Verdichterlaufrads 30 strömt, in einem randseitig gelegenen, ringförmigen Bereich des Eintrittsquerschnitts. Der Trimmsteller 44 fokussiert dadurch diese Frischgasströmung auf einen nabennahen Abschnitt des Verdichterlaufrads 30. In einer Freigabestellung gemäß der Fig. 2 kann das Frischgas dagegen über den gesamten Eintrittsquerschnitt in das Verdichterlaufrad 30 einströmen. Die die Irisblende 48 ausbildenden Blendenelemente, die jeweils zum Öffnen oder Schließen der Irisblende 48 um eine Achse verschwenkbar innerhalb des Gehäuses 50 gelagert sind, sind in der Freigabestellung vollständig in einer ringförmigen Vertiefung 64 des Gehäuses 50 angeordnet.

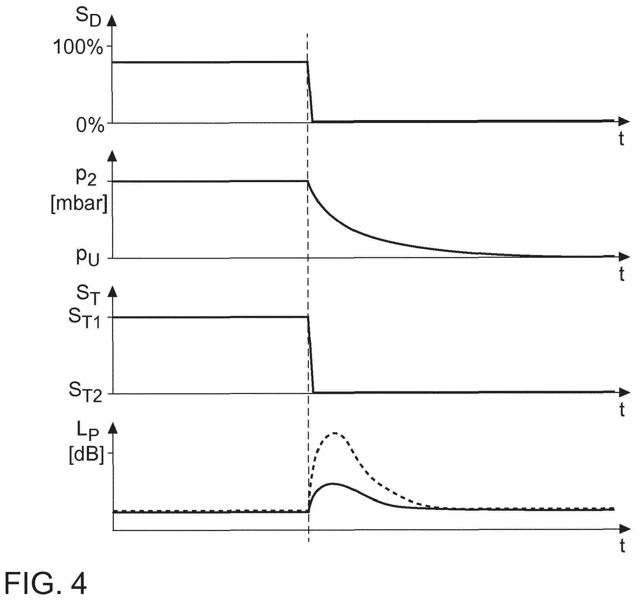

Erfindungsgemäß ist vorgesehen, dass bei einem Betrieb einer Brennkraftmaschine gemäß der Fig. 1 der Trimmsteller 44 stets bei einem Übergang von einem Zugbetrieb des Verbrennungsmotors 10, bei dem sich der Trimmsteller 44 in einer Freigabestellung gemäß beispielsweise der Fig. 2 befindet, zu einem Schubbetrieb in eine Abdeckstellung gemäß der Fig. 3 verstellt wird, um ein Entlastungsfauchen zu verhindern oder zumindest gering zu halten. Die Fig. 4 verdeutlicht dieses Vorgehen anhand von vier Diagrammen, die beispielhaft zeitgleiche Verläufe von verschiedenen Kennwerten während eines Abschnitts im Betrieb der Brennkraftmaschine, der einen solchen Übergang von einem Zugbetrieb in einen Schubbetrieb umfasst, aufzeigen.

Dabei zeigt das oberste Diagramm der Fig. 4 die prozentuale Öffnungsstellung S_{D} der Drosselklappe 34, wobei die Drosselklappe 34 umso weiter geöffnet ist, je höher die prozentuale Öffnungsstellung ist. Während eines Zugbetriebs des Verbrennungsmotors 10 ist die Drosselklappe 34 demnach zumindest teilweise geöffnet, während diese für einen Schubbetrieb des Verbrennungsmotors 10 vollständig geschlossen wird (Öffnungsstellung: 0%). Die Verlaufskurve in dem obersten Diagramm der Fig. 4 zeigt folglich einen Übergang von einem Zugbetrieb des Verbrennungsmotors 10 zu einem Schubbetrieb, wobei dieser Übergang, der durch eine vollständige Wegnahme der Last, mit der der Verbrennungsmotor 10 betrieben wird, gekennzeichnet ist, durch eine vertikal verlaufende, gestrichelte Linie gekennzeichnet ist. Ab diesem Übergang wird die Drosselklappe 34 schnellstmöglich in die vollständig geschlossene Stellung verstellt.

Die vollständige Lastwegnahme für den Betrieb des Verbrennungsmotors10, die den Übergang von einem Zugbetrieb in einen Schubbetrieb kennzeichnet, führt dazu, dass die Antriebsleistung der Abgasturbine 26 und damit die Verdichtungsleistung des Verdichters 22 relativ schnell absinkt. Der zuvor in dem Zugbetrieb durch die relativ hohe Verdichtungsleistung bewirkte, relativ hohe Druck p₂ in der Ladeluftstrecke des Frischgasstrangs verringert sich dabei nicht in entsprechend schneller Weise, da die Möglichkeit eines Abströmens des verdichteten Frischgases in den Verbrennungsmotor 10 infolge der geschlossenen Drosselklappe 34 nicht möglich ist. Es erfolgt daher, durch eine Rückströmung von verdichtetem Frischgas, eine Reduzierung der Druckdifferenz zwischen der Hochdruckseite und der Niederdruckseite des Verdichters über das nur mit relativ geringer Drehzahl rotierende Verdichterlaufrad 30. Das obere der zwei mittleren Diagramme der Fig. 4 verdeutlicht diesen relativ langsamen Druckverlust in der Ladeluftstrecke (bis nahezu der Umgebungsluftdruck p_{U} erreicht wird) nach einem Übergang von dem Zugbetrieb in den Schubbetrieb.

Die diesen Druckverlust in der Ladeluftstrecke bewirkende Rückströmung von verdichtetem Frischgas von der Hochdruckseite zu der Niederdruckseite des Verdichters 22 kann zu einem Entlastungsfauchen führen, da Druckschwingungen den in dem oberen der mittleren Diagramme der Fig. 4 dargestellten mittleren Ladedruck überlagern können und diese Druckschwingungen zu Schwingungsanregungen von stromauf des Verdichterlaufrads liegenden Komponenten des Frischgasstrangs führen können.

Das unterste Diagramm in der Fig. 4 verdeutlicht diesen Effekt anhand von Verläufen für den Schalldruckpegel L_{P} (in dB), der an einer Stelle außerhalb des Frischgasstrangs in der Nähe des Verdichtereinlasses 58 gemessen wurde. Dabei ist einerseits mit gestrichelter Linienführung der Verlauf für den Schalldruckpegel L_{P} dargestellt, der sich einstellt, wenn bei einem Übergang von dem Zugbetrieb in den Schubbetrieb gemäß der Fig. 4 der Trimmsteller 44, der während des Zugbetriebs in einer (geringstmöglich abdeckenden) Freigabestellung gemäß der Fig. 2 eingestellt war, in dieser Freigabestellung belassen wird. Es zeigt sich ein deutlich höherer Schalldruckpegel L_{P} kurz nach dem Übergang von dem Zugbetrieb in den Schubbetrieb im Vergleich zu einem erfindungsgemäßen Vorgehen (vgl. den Verlauf in dem untersten Diagramm der Fig. 4 mit durchgehender Linienführung), bei dem gemäß dem unteren der beiden mittleren Diagramme der Fig. 4 der zuvor in der Freigabestellung S_{T1} befindliche Trimmsteller 44 zeitgleich mit dem Übergang von dem Zugbetrieb in den Schubbetrieb in die (weitestmöglich abdeckende) Abdeckstellung S_{T2} gemäß der Fig. 3 verstellt wird.

### BEZUGSZEICHENLISTE

- 10: Verbrennungsmotor
- 12: Zylinder
- 14: Steuerungsvorrichtung
- 16: Injektor
- 18: Ansaugmündung
- 20: Luftfilter
- 22: Verdichter
- 24: Ladeluftkühler
- 26: Abgasturbine
- 28: Welle
- 30: Verdichterlaufrad
- 32: Vorrichtung zur variablen Turbinenanströmung
- 34: Drosselklappe
- 36: Abgasrückführleitung
- 38: Abgasnachbehandlungsvorrichtung
- 40: Regelventil
- 42: Abgaskühler
- 44: Trimmsteller
- 46: Anschlusskanal
- 48: Irisblende
- 50: Gehäuse des Verdichters
- 52: Strömungsraum
- 54: Eintrittsebene des Verdichterlaufrads
- 56: Einlasskanal
- 58: Verdichtereinlass
- 60: Laufradschaufel
- 62: Diffusorraum
- 64: Vertiefung des Gehäuses

- S_{D}: Öffnungsstellung der Drosselklappe
- p₂: Druck in der Ladeluftstrecke
- p_{U}: Umgebungsluftdruck
- S_{T}: Stellung des Trimmerstellers
- S_{T1}: Freigabestellung des Trimmerstellers
- S_{T2}: Abdeckstellung des Trimmerstellers
- L_{P}: Schalldruckpegel
- t: Zeit

## Patentansprüche

1. Verfahren zum Betreiben einer Brennkraftmaschine mit einem Verbrennungsmotor (10) und einem Frischgasstrang, wobei in den Frischgasstrang ein Verdichter (22) und, zwischen dem Verbrennungsmotor (10) und dem Verdichter (22), eine Drosselklappe (34) integriert sind und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung (S_{T1}) des Trimmstellers (44) geringstmöglich und in einer Abdeckstellung (S_{T2}) des Trimmstellers (44) weitestmöglich abgedeckt ist, wobei sich der Trimmsteller (44) während eines Zugbetriebs des Verbrennungsmotors (10) in der Freigabestellung (ST1) befindet, während die Drosselklappe (34) zumindest teilweise geöffnet ist, und wobei die Drosselklappe (34) für einen Schubbetrieb des Verbrennungsmotors (10) vollständig geschlossen wird, **dadurch gekennzeichnet, dass** der Trimmsteller (44) bei einem Übergang von dem Zugbetrieb zu dem Schubbetrieb möglichst unmittelbar mit der Lastwegnahme, durch die der Übergang gekennzeichnet ist, oder mit dem Beginn einer damit verbundenen Schließbewegung der Drosselklappe (34) in die Abdeckstellung (S_{T2}) verstellt wird.

2. Verfahren gemäß Anspruch 1, **dadurch gekennzeichnet, dass** der Trimmsteller (44) nach dem Erreichen eines definierten Grenzwerts wieder in die Freigabestellung (S_{T1}) verstellt wird.

3. Verfahren gemäß Anspruch 2, **dadurch gekennzeichnet, dass** der Grenzwert einen Gasdruck in dem Frischgasstrang definiert.

4. Brennkraftmaschine mit einem Verbrennungsmotor (10) und einem Frischgasstrang, wobei in den Frischgasstrang ein Verdichter (22) und, zwischen dem Verbrennungsmotor (10) und dem Verdichter (22), eine Drosselklappe (34) integriert sind und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung (S_{T1}) des Trimmstellers (44) geringstmöglich und in einer Abdeckstellung (S_{T2}) des Trimmstellers (44) weitestmöglich abgedeckt ist, **dadurch gekennzeichnet , dass** die Brennkraftmaschine eine Steuerungsvorrichtung (14) zur automatisierten Durchführung eines Verfahrens gemäß einem der vorhergehenden Ansprüche umfasst.

5. Brennkraftmaschine gemäß Anspruch 4, **dadurch gekennzeichnet, dass** der Trimmsteller (44) eine ringförmige Blende (48) umfasst.

6. Brennkraftmaschine gemäß Anspruch 5, **dadurch gekennzeichnet, dass** der Trimmsteller (44) zusätzlich eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene (54) des Verdichterlaufrads (30) in einen Strömungsraum (52) des Verdichters (22) übergehen, wobei der periphere Strömungsbereich mittels der Blende (48) verschließbar ausgebildet ist.

7. Brennkraftmaschine gemäß Anspruch 6, **dadurch gekennzeichnet, dass** zumindest ein zu dem Verdichterlaufrad (30) benachbart gelegener Endabschnitt der Strömungsführungsvorrichtung längsaxial verschiebbar ausgebildet ist, wobei der periphere Strömungsbereich in dem Bereich der Eintrittsebene (54) des Verdichterlaufrads (30) in einer Verschlussstellung der Strömungsführungsvorrichtung durch diesen Endabschnitt verschlossen und in einer Öffnungsstellung freigegeben ist.

8. Brennkraftmaschine gemäß einem der Ansprüche 4 bis 6, **dadurch gekennzeichnet, dass** der Trimmsteller (44) bei fehlender Ansteuerung durch die Steuerungsvorrichtung (14) mittels eines Rückstellelements in eine Freigabestellung (S_{T1}), in der der Trimmsteller (44) den randseitigen Abschnitt des Eintrittsquerschnitts geringstmöglich abdeckt, beaufschlagt ist.

9. Kraftfahrzeug mit einer Brennkraftmaschine gemäß einem der Ansprüche 4 bis 8.

## Claims

1. Method for operating an engine comprising an internal combustion engine (10) and a fresh A/F mixture stream, with a compressor (22) and, between the internal combustion engine (10) and the compressor (22), a throttle valve (34) being integrated into the fresh A/F mixture stream and a trim controller (44) being associated with the compressor (22), by means of which trim controller a marginal portion of the entry cross section of a compressor wheel (30) of the compressor (22) can be variably covered, the marginal portion of the entry cross section being covered as little as possible in a release position (S_{T1}) of the trim controller (44) and covered as far as possible in a coverage position (S_{T2}) of the trim controller (44), the trim controller (44) being in the release position (ST1) during a traction operation of the internal combustion engine (10), while the throttle valve (34) is at least partially opened, and the throttle valve (34) being completely closed for an overrun operation of the internal combustion engine (10), **characterized in that** in the event of a transition from the traction operation to the overrun operation, the trim controller (44) is moved into the coverage position (S_{T2}) as immediately as possible upon removal of the load, which characterizes the transition, or at the beginning of an associated closing movement of the throttle valve (34).

2. Method according to claim 1, **characterized in that** the trim controller (44) is moved back into the release position (S_{T1}) once a defined threshold has been reached.

3. Method according to claim 2, **characterized in that** the threshold defines a gas pressure in the fresh A/F mixture stream.

4. Engine having an internal combustion engine (10) and a fresh A/F mixture stream, with a compressor (22) and, between the internal combustion engine (10) and the compressor (22), a throttle valve (34) being integrated into the fresh A/F mixture stream and a trim controller (44) being associated with the compressor (22), by means of which trim controller a marginal portion of the entry cross section of a compressor wheel (30) of the compressor (22) can be variably covered, the marginal portion of the entry cross section being covered as little as possible in a release position (S_{T1}) of the trim controller (44) and covered as far as possible in a coverage position (S_{T2}) of the trim controller (44),
**characterized in that** the engine comprises a control device (14) for automatically performing a method according to any of the preceding claims.

5. Engine according to claim 4, **characterized in that** the trim controller (44) comprises a ring-shaped cover (48).

6. Engine according to claim 5, **characterized in that** the trim controller (44) additionally comprises a flow guidance device by means of which at least one portion of the fresh A/F mixture stream is divided into a central flow region and a peripheral flow region, the two of which transition into a flow chamber (52) of the compressor (22) in the region of the entry plane (54) of the compressor wheel (30), it being possible to close the peripheral flow region by means of the cover (48).

7. Engine according to claim 6, **characterized in that** at least one end portion of the flow guidance device adjacent to the compressor wheel (30) is designed to be longitudinally displaceable, the peripheral flow region in the region of the entry plane (54) of the compressor wheel (30) being closed by this end portion in a closed position of the flow guidance device and released in an open position.

8. Engine according to any of claims 4 to 6, **characterized in that** the trim controller (44), when it is not controlled by the control device (14), is returned to a release position (S_{T1}), in which the trim controller (44) covers the marginal portion of the entry cross section as little as possible, by means of a reset element.

9. Motor vehicle comprising an engine according to any of claims 4 to 8.

## Revendications

1. Procédé permettant de faire fonctionner un moteur à combustion interne comportant un moteur thermique (10) et un circuit de gaz frais, dans lequel un compresseur (22) et, entre le moteur thermique (10) et le compresseur (22), un papillon des gaz (34) sont intégrés dans le circuit de gaz frais, et dans lequel un organe de compensation (44) est associé au compresseur (22), par lequel une section marginale de la section transversale d'entrée d'une roue mobile de compresseur (30) du compresseur (22) peut être recouverte dans une mesure variable, dans lequel la section marginale de la section transversale d'entrée est recouverte le plus faiblement possible dans une position de libération (S_{T1}) de l'organe de compensation (44) et le plus largement possible dans une position de recouvrement (S_{T2}) de l'organe de compensation (44), dans lequel l'organe de compensation (44) se trouve dans la position de libération (ST1) pendant un fonctionnement en traction du moteur thermique (10), tandis que le papillon des gaz (34) est au moins partiellement ouvert, et dans lequel le papillon des gaz (34) est complètement fermé pour un fonctionnement en décélération du moteur thermique (10), **caractérisé en ce que,** lors d'une transition du fonctionnement en traction au fonctionnement en décélération, l'organe de compensation (44) est déplacé dans la position de recouvrement (S_{T2}) si possible directement avec la suppression de la charge qui caractérise la transition ou avec le début d'un mouvement de fermeture du papillon des gaz (34) qui y est relié.

2. Procédé selon la revendication 1, **caractérisé en ce que** l'organe de compensation (44) est de nouveau déplacé dans la position de libération (S_{T1}) après avoir atteint une valeur limite définie.

3. Procédé selon la revendication 2, **caractérisé en ce que** la valeur limite définit une pression de gaz dans le circuit de gaz frais.

4. Moteur à combustion interne comportant un moteur thermique (10) et un circuit de gaz frais, dans lequel un compresseur (22) et, entre le moteur thermique (10) et le compresseur (22), un papillon des gaz (34) sont intégrés dans le circuit de gaz frais, et dans lequel un organe de compensation (44) est associé au compresseur (22), par lequel une section marginale de la section transversale d'entrée d'une roue mobile de compresseur (30) du compresseur (22) peut être recouverte dans une mesure variable, dans lequel la section marginale de la section transversale d'entrée est recouverte le plus faiblement possible dans une position de libération (S_{T1}) de l'organe de compensation (44) et le plus largement possible dans une position de recouvrement (S_{T2}) de l'organe de compensation (44), **caractérisé en ce que** le moteur à combustion interne comprend un dispositif de commande (14) pour l'exécution automatisée d'un procédé selon l'une des revendications précédentes.

5. Moteur à combustion interne selon la revendication 4,
**caractérisé en ce que** l'organe de compensation (44) comprend un diaphragme (48) annulaire.

6. Moteur à combustion interne selon la revendication 5,
**caractérisé en ce que** l'organe de compensation (44) comprend en outre un dispositif de guidage d'écoulement par lequel au moins une section du circuit de gaz frais est divisée en une zone d'écoulement centrale et une zone d'écoulement périphérique, qui toutes deux se prolongent en un espace d'écoulement (52) du compresseur (22) dans la zone du plan d'entrée (54) de la roue mobile de compresseur (30), dans lequel la zone d'écoulement périphérique est réalisée de manière à pouvoir être fermée au moyen du diaphragme (48).

7. Moteur à combustion interne selon la revendication 6,
**caractérisé en ce qu'**au moins une section d'extrémité du dispositif de guidage d'écoulement située de manière adjacente à la roue mobile de compresseur (30) est réalisée de manière à pouvoir être coulissée dans l'axe longitudinal, dans lequel la zone d'écoulement périphérique dans la zone du plan d'entrée (54) de la roue mobile de compresseur (30) est fermée par ladite section d'extrémité dans une position de fermeture du dispositif de guidage d'écoulement et est libérée dans une position d'ouverture.

8. Moteur à combustion interne selon l'une des revendications 4 à 6, **caractérisé en ce que,** en l'absence de commande par le dispositif de commande (14), l'organe de compensation (44) est sollicité au moyen d'un élément de rappel dans une position de libération (S_{T1}) dans laquelle l'organe de compensation (44) recouvre le plus faiblement possible la section marginale de la section transversale d'entrée.

9. Véhicule automobile comportant un moteur à combustion interne selon l'une des revendications 4 à 8.
